(19) Europäisches Patentamt
European Patent Office
Office européen des brevets

(11) **EP 3 318 590 B1**

(12) **EUROPÄISCHE PATENTSCHRIFT**

(45) Veröffentlichungstag und Bekanntmachung des Hinweises auf die Patenterteilung:
**05.08.2020   Patentblatt 2020/32**

(51) Int Cl.:
*C08G 63/08* *(2006.01)*        *C08G 63/78* *(2006.01)*
*C08G 63/90* *(2006.01)*

(21) Anmeldenummer: **16197639.4**

(22) Anmeldetag: **08.11.2016**

(54) **VERFAHREN ZUR ABTRENNUNG VON FLÜCHTIGEN VERBINDUNGEN AUS VISKOSEN PRODUKTEN MIT EINEM DÜNNSCHICHTVERDAMPFER**

METHOD FOR THE SEPARATION OF VOLATILE COMPOUNDS FROM VISCOUS PRODUCTS HAVING A THIN FILM EVAPORATOR

PROCÉDÉ DE SÉPARATION DE COMPOSÉS VOLATILS PROVENANT DE PRODUITS VISQUEUX À L'AIDE D'UN ÉVAPORATEUR EN COUCHE MINCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.05.2018   Patentblatt 2018/19**

(73) Patentinhaber:
• **thyssenkrupp AG**
  **45143 Essen (DE)**
• **Uhde Inventa-Fischer GmbH**
  **13509 Berlin (DE)**

(72) Erfinder:
• **MÜHLBAUER, Udo**
  **10119 Berlin (DE)**
• **HAGEN, Rainer**
  **13465 Berlin (DE)**

(74) Vertreter: **Pfenning, Meinig & Partner mbB Patent- und Rechtsanwälte Theresienhöhe 11a 80339 München (DE)**

(56) Entgegenhaltungen:
EP-A1- 1 612 230        WO-A1-2014/115486
CH-A- 523 087           US-A- 5 844 066

## Beschreibung

Die vorliegende Erfindung betrifft ein Verfahren zur Abtrennung von Verbindungen in gasförmigem Aggregatszustand aus PLA-enthaltenden Produkten in viskosem Aggregatszustand mittels eines Dünnschichtverdampfers. Die Verbindungen können bei Normalbedingungen in flüssigem oder festem Aggregatszustand in den Produkten enthalten sein. Die Erfindung betrifft ferner ein gemäß dem erfindungsgemäßen Verfahren hergestelltes Polylactidharz.

Polymilchsäure (PLA) wird überwiegend durch Ringöffnungspolymerisation von Lactid in der Schmelze bei Endtemperaturen zwischen 160°C und 200°C hergestellt. Die Polymerisation führt zu einem chemischen Ring-Ketten-Gleichgewicht, in dem abhängig von der Endtemperatur zwischen 3 % und 5 % nicht umgesetztes Monomer vorliegt. Wahlweise kann die Polymerisation auch bei einem unvollständigen Umsatz abgebrochen werden, die Monomerkonzentration kann dann bis zu 20 % oder mehr betragen, abhängig von wirtschaftlichen Überlegungen. In jedem Fall muss das nicht umgesetzte Monomer aus dem Polymer abgetrennt werden, um ein technisch verwendbares PLA herzustellen. Dafür ist ein Restmonomergehalt von < 0,5 % Bedingung, um bei der Verarbeitung aus der Schmelze Rauchentwicklung, Kontamination und Korrosion der Umgebung mit Lactid zu vermeiden. Außerdem beeinflussen größere Restmonomerkonzentrationen die mechanischen und thermischen Eigenschaften von Artikeln aus PLA ungünstig. Nicht zuletzt begünstigt Rest-Lactid im PLA durch die Aufnahme von Luftfeuchtigkeit den hydrolytischen Abbau.

Die Abtrennung geschieht im industriellen Maßstab in der Regel durch Verdampfen im Vakuum (Vakuum-Entmonomerisierung). Für diesen Schritt sind die verschiedensten Apparate vorgeschlagen worden, unter anderem Entgasungsextruder, Extraktoren, Drehscheibenreaktoren und Dünnschichtverdampfer.

Letztere basieren auf dem Prinzip, dass mittels Verteilung von Material in einer dünnen Schicht auf der Innenfläche einer temperierbaren Gehäusewand eine hohe Wärmestromdichte erzielt werden kann, wodurch letztendlich eine große Verdampfungsleistung und hohe Eindampfverhältnisse in einem Durchlauf ermöglicht werden können.

Zur Verteilung des Materials können insbesondere mit Wischerelementen bestückte Rotoren vorgesehen werden; entsprechende Dünnschichtverdampfer, die zusätzlich mit einer Materialförderung ausgestattet sind, sind dem Fachmann unter der Bezeichnung Filmtruder bekannt.

Eine Dünnschichtbearbeitungsvorrichtung in Form eines Filmtruders wird etwa in der CH 523 087 beschrieben, gemäß welcher in einer heizbaren und/oder kühlbaren Behandlungskammer koaxial ein antreibbarer Rotor angeordnet ist, welcher einen Rohrkörper aufweist, auf dessen Umfang geneigte Flügel gleichmäßig verteilt sind und auf dem im Übrigen axial in die Nähe der Innenfläche des Gehäusemantels reichende oder die Innenfläche berührende Wischerblätter angeordnet sind. Im Betrieb wird das zu behandelnde Material durch die in Rotation versetzten Wischerblätter erfasst und in dünner Schicht auf der Innenwand des Gehäuses verteilt, während die schräg gestellten Flügelteile dem erfassten Material eine zum Auslass hin gerichtete Bewegungskomponente erteilen.

Der industrielle Maßstab erfordert einen wirtschaftlichen Prozess, um mit den bestehenden, meist rohölbasierten Polymeren preislich konkurrieren zu können. Die Wirtschaftlichkeit eines Verfahrens ergibt sich aus den Investitionskosten für die Apparate und deren Installation sowie den Betriebskosten, die sich aus dem Verbrauch von Energie und Hilfsstoffen ergeben. Mehrstufige Verfahren mit zahlreichen Apparaten sind demnach ebenso zu vermeiden wie der Einsatz von Schleppmitteln, die zwar die Verdampfung des Monomeren erleichtern und damit zu einem niedrigeren Restmonomergehalt führen, gleichzeitig aber die Betriebskosten erhöhen.

In EP 0 499 747 A2 werden zur Monomerabtrennung Fallstrangentgaser, Entgasungsextruder oder Dünnschichtverdampfer vorgeschlagen. Die Dämpfe aus der Entgasung werden in einem oder mehreren hintereinandergeschalteten Kondensatoren niedergeschlagen. Zur Vakuumerzeugung werden ein-oder mehrstufige, nicht näher bezeichnete Aggregate verwendet, die ein Vakuum bis zu 0,002 atm. (= 2 mbar) erzeugen. Um den Partialdruck des abzutrennenden Lactids zu reduzieren und damit die Verdampfung zu erleichtern und den Restmonomergehalt im Polymer zu senken wird die Zugabe von Schleppmitteln wie Stickstoff, Toluol, Ethylbenzol als Möglichkeit genannt. Obwohl nicht explizit angegeben, sprechen die Verwendung des Begriffs "Kondensator" und der Druck von 2 mbar dafür, dass die Dämpfe in flüssiger Form niedergeschlagen werden. Damit ist zugleich das anwendbare Vakuum und der Restmonomergehalt begrenzt. Nachteil dieses Verfahrens ist ein vergleichsweise hoher Restmonomergehalt nach der Monomerverdampfung, wenn das abgetrennte Lactid oberhalb seines Tripelpunkts in flüssiger Form abgeschieden wird. Durch die Zugabe von Schleppmitteln kann zwar der Restmonomergehalt reduziert werden, dies erhöht aber die Betriebskosten des Verfahrens (Schleppmittelkosten und höherer Energiebedarf der Vakuumanlage).

WO 98/36012 bevorzugt zur Vakuumverdampfung einen Fallstrangentgaser, wobei die Polymerschmelze in Form von Fäden in einem offenbar nicht unter Vakuum stehenden Behälter nach unten fällt. Heißes Inertgas wie Stickstoff oder trockene Luft wird in den Entgaser eingeblasen, um die Verdampfung des Lactids von der Oberfläche der fallenden Fäden zu erleichtern. Das lactidhaltige heiße Gas wird nach Verlassen des Entgasungsapparats schnell auf 20-40°C abgekühlt, wobei Lactid als kristalliner Staub ausfällt. Vorzugsweise geschieht das in einer "Kristallisationskammer" durch Vermischen mit kalter Luft. Nachteil dieses Verfahrens ist die Vermischung des Lactids mit großen Mengen an Inertgas, die es erschweren, das Lactid vollständig zurückzugewinnen und sehr große Apparate zur Trennung des Gases vom Lactidstaub erfordern (Zyklon, Gasfilter). Wichtigster Nachteil ist indessen, dass bei der Entmonomerisierung Atmosphärendruck herrscht und demnach ein Restmonomergehalt von 0,5 % unerreichbar ist. Abgesehen davon erzeugt der Fallstrangapparat zwar eine große Oberfläche, die Oberfächenerneuerung ist jedoch eng begrenzt auf die Umgebung der Düsenbohrungen, aus denen die Schmelze austritt. Anschließend findet sie nur durch langsames Verjüngen des Strangs statt, wodurch sehr lange Fallstrecken notwendig werden. Die Stoffaustauschleistung insgesamt ist deshalb begrenzt und Restmonomerkonzentrationen in der Größenordnung von 0,5% werden auch im Vakuum nicht erreicht.

EP 1 070 097 beschreibt einen Prozess zur Herstellung von PLA, ausgehend von Lactid, bestehend aus den folgenden Prozessschritten: Polymerisation, Stabilisierung, Entmonomerisierung, Granulierung und Kristallisation / Trocknung. Für die Entmonomerisierung werden die auch bereist in den oben genannten Schriften erwähnten Apparate und Maschinen genannt. Die Dünnschichtverdampfung ist dabei aufgrund der guten Oberflächenerneuerung durch die Rotoren, wodurch das Verdampfen des Dilactids befördert wird, das bevorzugte Verfahren. Die Schrift gibt den bevorzugten Druckbereich zwischen 0,5 mm Hg und 5 mm Hg und den Temperaturbereich zwischen 200°C und 260°C an. Die angegebenen Bereiche sind sehr breit und, dies trifft vor allem für die Temperatur zu, die obere Grenzen sind außerhalb praktikabler Werte. PLA ist bekanntermaßen temperatursensibel und sollte nicht über 240°C, besser nicht über 220°C verarbeitet werden; siehe dazu zum Beispiel die "Processing Guides" von NatureWorks, der PLA-produzierenden Tochterfirma des Anmelders Cargill.

Die Schrift beschränkt sich auf eine allgemeine Beschreibung der Dünnschichtverdampfung und seine Anwendung auf die Entmonomerisierung bei PLA in den genannten Druck- und Temperaturbereichen. Es finden sich keine Angaben zu wichtigen Prozessparametern, wie Rotorumfangsgeschwindigkeit, Viskosität der PLA-Schmelze, Verweilzeit im Apparat, Monomergehalt und Molekulargewicht vor und nach der Entmonomerisierung. Die wichtige Tatsache, dass durch die Rotorbewegung Energie in die Schmelz eingetragen wird und sich dadurch die Temperatur der Schmelze erhöht, wird ebenso wenig erwähnt. Sie scheint der Anmelderin entweder nicht bekannt zu sein, oder sie nimmt es billigend in Kauf. Auf Letzteres lässt die große Temperaturspanne schließen. In diesem Fall ist aber mit einem merklichen Molekulargewichtsabbau und somit zu einer thermischen Produktschädigung, die sich häufig in Form einer Gelbfärbung bemerkbar macht, zu rechnen.

Schließlich beschreiben die Fa. Purac/Sulzer in EP2698392 oder auch in der Sulzer-Firmenbroschüre **"Polymer Production Technology"** ein zweistufiges, statisches, also ohne bewegte Einbauten besitzendes, Entmonomerisierungsverfahren. Das Verfahren ist gekennzeichnet durch einen hohen apparativen Aufwand - jede Stufe besteht aus einem statischer Mischer/Wärmetauscher und einem Entmonomerisierungsapparat, welcher unter hohem Vakuum steht. Aufgrund der fehlenden Oberflächenerneuerung durch mechanische Bewegung der Schmelze, muss das spezifische Oberflächen-zu VolumenVerhältnis sehr groß und die Fallstrecke der Stränge sehr lang sein. Beides lässt die Apparategröße stark wachsen. Für das Verfahren sind somit vier aufwändige Apparate vonnöten. Trotz der großen Apparate, muss, wie in der Broschüre beschrieben, ein Schleppmittel (stripping agent) zugegeben werden, um niedrige Monomergehalte zu erreichen. Dies erhöht die Betriebskosten (Energiebedarf Vakuum, Kosten des Schleppmittels) erheblich. Insbesondere für großtechnische Produktionsanlagen ist dieses Verfahren somit wirtschaftlich ungünstig. Aufgrund der fehlenden zentralen Rührerwelle wird der Zufluss zur Austragspumpe im Austragsbereich nicht durch nach-untenfördernde Rührelemente unterstützt. Das Produkt kann nur per Gravitation zur Pumpe strömen. Bei sehr zähflüssigen Polymeren mit Viskositäten über 2.000 Pa.s, wie sie bei PLA auftreten, bedingt dies eine vergleichsweise große Zulaufhöhe zur Pumpe. Dadurch erhöht sich die Verweilzeit im Apparat. Es findet Monomerrückbildung und Molekulargewichtsabbau statt. Beides wirkt sich produktschädigend aus. Zudem entstehen in einem Konus ohne Zwangsförderung zur Austragspumpe Totzonen, in denen das Produkt lange Zeit verharrt und zu schwarzen, festen Partikeln, in der Fachwelt häufig als Black Specks bezeichnet, degradiert. Diese Black Specks finden sich im Produkt wieder und verursachen bei der Verarbeitung zu Folien, Flaschen und Fasern Probleme.

Wie erwähnt sind Dünnschichtbehandlungsvorrichtungen auf die Behandlung von viskosem Material ausgelegt. Bei Polylactid, welches ein temperaturempfindliches Material darstellt, stellt sich diesbezüglich allerdings das Problem, dass aufgrund der relativ hohen Viskosität über die Rotorwelle eine relativ hohe Menge an Dissipationsenergie in das Material eingetragen wird. Zusammen mit der über den Gehäusemantel eingetragenen Wärme kann dies dazu führen, dass die thermische Belastung zu hoch werden und das Material dadurch Schaden erleiden kann. Im Interesse eines hohen Materialdurchsatzes soll demgegenüber aber die Prozesswärme möglichst hoch gehalten werden. So soll etwa im Falle eines Dünnschichtverdampfers die Prozesswärme möglichst hoch gehalten werden, um eine möglichst hohe Verdampfungsleistung zu gewährleisten. Zudem soll durch die hohe Prozesswärme ein großer Diffusionskoeffizient erhalten werden, um den Stofftransport zu begünstigen.

US 5,844,066 beschreibt ein Verfahren zur Herstellung von Milchsäurebasiertem Polyester sowie einen entsprechend hergestellten Polyester.

Aus der WO 2014/115486 A1 ist eine Polymilchsäure-Zusammensetzung sowie ein Verfahren zu deren Herstellung und eine Vorrichtung bekannt.

Ausgehend vom Stand der Technik ist es somit Aufgabe der vorliegenden Erfindung, ein Verfahren zur Entfernung von leichtflüchtigen Verbindungen aus viskosen PLA enthaltenden Produkten anzugeben, bei dem die Produkte möglichst schonend behandelt werden, so dass eine qualitative Verschlechterung der Produkte weitestgehend unterbleibt. Insbesondere ist es Aufgabe der vorliegenden Erfindung, nach einer Ringöffnungspolymerisation von Dilactid zu PLA in der Schmelze verbliebene Monomere möglichst vollständig und auf schonende Art und Weise unter Berücksichtigung wirtschaftlicher Rahmenbedingungen zu entfernen.

Unter schonender Art und Weise ist dabei zu verstehen, dass die thermische Belastung und die Verweilzeit während der Entmonomerisierung gering sind und das Produkt dabei keine Schädigung erleidet, die sich in einem deutlichen Molekulargewichtsabbau und einer Produktverfärbung bemerkbar machen kann. Die Entfernung des Monomeren sollte dabei vollständig sein, worunter eine mindestens 5-fache, besser 10-fache Reduzierung des Monomergehalts verstanden wird. Der Restmonomergehalt des Produktes sollte dabei vorzugsweise unter 0,5 % betragen. Schließlich muss das Verfahren für großtechnische Produktionsanlagen wirtschaftlich sein, worunter möglichst niedrige Betriebs- und Investitionskosten verstanden werden. Dabei ist es insbesondere wichtig, dass das aus der Schmelze abgedampfte Dilactid zurückgewonnen und in der Ringöffnungspolymerisation wieder eingesetzt wird.

Diese Aufgabe wird hinsichtlich eines Verfahrens zur Abtrennung von flüchtigen Verbindungen aus PLA oder Copolymeren von Lactid enthaltenden Polymerschmelzen mit den Merkmalen des Patentanspruchs 1 gelöst. Die abhängigen Patentansprüche stellen dabei vorteilhafte Weiterbildungen dar. Die Erfindung betrifft ein Verfahren zur Abtrennung von Verbindungen in gasförmigem Aggregatszustand aus einer diese Verbindungen in flüssigem oder festem Aggregatszustand enthaltenden Polymerschmelze, die Polylactid und/oder ein Poly(co)lactid beinhaltet, mit einer Dünnschichtbehandlungsvorrichtung (10), umfassend

- ein Gehäuse mit einem beheizbaren und/oder kühlbaren Gehäusemantel, welcher eine sich in axialer Richtung erstreckende rotationssymmetrische Behandlungskammer umschließt,

- mindestens einen in einem Einlassbereich des Gehäuses angeordneten Einlassstutzen zum Einführen des zu behandelnden Materials in die Behandlungskammer,

- mindestens einen in einem Auslassbereich des Gehäuses angeordneten Auslassstutzen zum Austragen des Materials aus der Behandlungskammer, und

- eine in der Behandlungskammer angeordnete und sich koaxial erstreckende, antreibbare Rotorwelle zur Erzeugung eines Materialfilms auf der Innenfläche des Gehäusemantels und zur Förderung des Materials in Richtung vom Einlassbereich zum Auslassbereich hin, wobei die Rotorwelle einen zentralen Rotorwellenkörper und auf dessen Umfang angeordnete Rotorblätter umfasst, deren radial äußerstes Ende von der Innenfläche des Gehäusemantels beabstandet ist, sowie

- mindestens einen in der Behandlungskammer angeordneten Temperatursensor zur Messung der Temperatur des Materialfilms,

bei dem

die Polymerschmelze in viskosem Aggregatszustand über den mindestens einen Einlassstutzen in die Behandlungskammer eingetragen wird, auf der Innenfläche des Gehäusemantels ein Film der Polymerschmelze erzeugt wird, wobei zumindest ein Teil der in der Polymerschmelze in flüssigem oder festem Aggregatszustand enthaltenen Verbindungen in den gasförmigem Aggregatszustand überführt und im gasförmigem Aggregatszustand aus der Dünnschichtbehandlungsvorrichtung ausgetragen wird, sowie

die behandelte Polymerschmelze über den mindestens einen Auslassstutzen aus der Dünnschichtbehandlungsvorrichtung ausgetragen wird,

wobei mittels des mindestens einen Temperatursensors an mindestens einer Stelle eine permanente oder temporäre Bestimmung eines lokalen Temperaturwertes des Films des Produktes durchgeführt wird.

Die Behandlungskammer der Dünnschichtbehandlungsvorrichtung entspricht somit dem Gehäuseinnenraum, in welchem die Polylactid und/oder Poly(co)lactid enthaltende Polymerschmelze dem erfindungsgemäßen Verfahren, bei dem insbesondere eine Abtrennung flüchtiger Komponenten, insbesondere durch Destillation, Entgasung und/oder Trocknung aus der Polymerschmelze erfolgt, unterzogen wird. Sie ist in der Regel zylindrisch ausgestaltet, wobei aber denkbar oder bevorzugt ist, dass sie im auslassseitigen Endbereich konisch verjüngt ausgestaltet ist.

In der Regel ist zum Austragen der Polymerschmelze aus der Dünnschichtbehandlungsvorrichtung im auslassseitigen Endbereich des Gehäuses eine Austragspumpe angeordnet, vorzugsweise eine Zahnradpumpe.

Wie erwähnt ist das erfindungsgemäße Verfahren auf die Behandlung einer Polylactid und/oder Poly(col)lactid enthaltenden Polymerschmelze in viskosem Aggregatszustand ausgelegt. Unter "viskosem Aggregatszustand" wird im Sinne der vorliegenden Erfindung typischerweise eine Polymerschmelze mit einer Viskosität im Bereich von 1 bis 50'000 Pa.s, insbesondere von 50 bis 15'000 Pa·s verstanden. Vorzugsweise weist das zu erfindungsgemäß zu behandelnde Material mindestens temporär eine Viskosität von mehr als 100 Pa.s, bevorzugter mehr als 300 Pa.s, weiter bevorzugt mehr als 500 Pa.s, am bevorzugtesten 1000 Pa.s bis 6000 Pa·s auf, da ab dieser Viskosität die Dissipationsphänomene stark zunehmen und die Vorteile der Erfindung besonders stark zu Tage treten. Die Bestimmung der Viskosität kann z.B. mit einem Rotationsviskosimeter gemäß DIN ISO 1652:2013-02 bei der jeweiligen Temperatur der Polymerschmelze erfolgen.

Mittels des Temperatursensors der Dünnschichtbehandlungsvorrichtung kann der erzeugte, auf die innere Oberfläche der Behandlungskammer verteilte Film der Polymerschmelze lokal aufgelöst auf seine Temperatur überwacht werden. Somit können die erhaltenen Temperaturmesswerte dazu verwendet werden, einerseits optimale Temperaturbedingungen des Produktfilms einzustellen, andererseits das Über- bzw. Unterschreiten kritischer Temperaturen zu verhindern helfen.

Die Erfindung erlaubt es somit, die Temperatur des Films der Polymerschmelze lokal zu bestimmen und aufgrund der bestimmten Temperatur bzw. des bestimmten Temperaturprofils z.B. mindestens einen Prozessparameter in Abhängigkeit von einer Abweichung von einem Sollwert einzustellen. Insbesondere kann die in die Polymerschmelze einzutragende bzw. abzuführende Wärmemenge geregelt werden, z.B. durch entsprechende Temperierung des Gehäusemantels, um die Prozesswärme lokal auf den gewünschten Wert einzustellen, welcher im Falle einer Dünnschichtverdampfung typischerweise hoch genug ist, um eine hohe Verdampfungsleistung zu gewährleisten, und tief genug, um eine kritische Temperatur, ab der eine thermisch bedingte Schädigung des zu behandelnden Materials eintreten kann, nicht zu überschreiten.

Zur Einstellung der gewünschten Prozesswärme kann der Gehäusemantel mittels eines vorgewärmten Wärmeträgermediums beheizt oder gekühlt werden. Alternativ oder zusätzlich kann die Einstellung der Prozesswärme auch über die Geometrie und/ oder die Drehgeschwindigkeit der Rotorwelle geregelt werden.

Letztendlich erlaubt es die vorliegende Erfindung somit, einen stabilen und reproduzierbaren Betrieb sicherzustellen und die Herstellung von qualitativ hochwertigen Produkten zu ermöglichen.

Bevorzugt sind die abzuhemmenden Verbindungen ausgewählt aus der Gruppe bestehend aus Lactid, Milchsäure, Milchsäuredimeren und bei den gegebenen Prozessbedingungen gasförmig vorliegenden Milchsäureoligomeren, Wasser und Additive der Polymersynthese, wie z.B. Katalysatoren, Initiatoren oder Stabilisatoren sowie Kombinationen hiervon.

Bevorzugt ist weiterhin, wenn die Rotorblätter mit einer Rotationsgeschwindigkeit von 0,1 bis 10 m/s, bevorzugt 0,5 bis 3 m/s, besonders bevorzugt von 0,5 bis 2 m/s betrieben werden. Alternativ oder additiv hierzu wird mittels der Rotorblätter eine Scherrate von maximal 1000 1/s, bevorzugt 100 bis 500 1/s, besonders bevorzugt 200 bis 300 1/s eingestellt, wobei die Scherrate der Quotient aus Umlaufgeschwindigkeit und Abstand der Rotorblätter von der Innenwand der Behandlungskammer ist.

Gemäß einer weiteren vorteilhaften Ausführungsform kann an der Rotorwelle im Auslassbereich ein Element angeordnet sein, das bei Rotation der Rotorwelle die Polymerschmelze in Richtung des Auslassstutzens fördert. Dieses Förderelement kann beispielsweise als Förderschnecke oder -schraube oder ein Kranz mit einer Mehrzahl von Stegen ausgebildet sein. Ein entsprechender Kranz ist beispielsweise in der CH 523087 beschrieben.

Wie erwähnt ist der Gehäusemantel beheizbar und/oder kühlbar ausgestaltet. In der Regel ist dazu im Innern des Gehäusemantels ein Gehäusemantelhohlraum ausgebildet, welcher dazu bestimmt sind, zum Zwecke der Beheizung und/oder Kühlung von einem Wärmeträgermedium durchströmt zu werden. Diesbezüglich bevorzugt ist, dass die Gehäusemantelwand doppelwandig ausgestaltet ist und der Zwischenraum zwischen Gehäusemantelinnenwand und Gehäusemantelauswand dazu bestimmt ist, vom Wärmeträgermedium durchströmt zu werden.

Um auf die lokale Prozesswärme in der Dünnschichtbehandlungsvorrichtung gezielt einwirken zu können, ist weiter bevorzugt, dass der Gehäusemantel mindestens zwei Gehäusemantelsegmente umfasst, welche derart ausgestaltet sind, um unabhängig voneinander beheizt und/oder gekühlt zu werden. Gemäß dieser Ausführungsform sind vorzugsweise jedem Gehäusemantelsegment jeweils ein separates Wärmeträgerkreislaufsystem mit separatem Wärmeträgereinlass und separatem Wärmeträgerauslass zugeordnet.

Dabei ist weiter bevorzugt, dass die Gehäusemantelsegmente jeweils eine entsprechende Behandlungskammerzone umschließen und die Temperatursensoren auf verschiedene Behandlungskammerzonen verteilt sind. Idealerweise wird die Behandlungskammer somit im Hinblick auf die Anordnung der Temperatursensoren und der Gehäusemantelsegmente vorab in unterschiedliche Behandlungskammerzonen eingeteilt, in denen im Vergleich zur vorhergehenden Behandlungskammerzone eine relativ starke Änderung in der Zusammensetzung bzw. in der Viskosität des Materials erwartet wird. Besonders bevorzugt werden dabei in jenen Behandlungskammerzonen, in denen aufgrund des erwarteten Viskositätsanstiegs auch ein relativ hoher Eintrag an Dissipationsenergie erwartet wird, mehrere Temperatursensoren angeordnet, um gerade in diesen Behandlungskammerzonen die Temperatur in relativ hoher Auflösung zu überwachen und letztendlich das Überschreiten einer kritischen Temperatur zuverlässig zu vermeiden. Dies ist insbesondere im auslassseitigen Endbereich der Behandlungskammer der Fall.

Hierdurch kann eine besonders bevorzugte Verfahrensführung realisiert werden, bei der der erhaltene Temperaturwert der Polymerschmelze zur Einstellung der Temperatur des beheizbaren und/oder kühlbaren Gehäusemantels auf einen vorbestimmten Sollwert verwendet wird, insbesondere der Gehäusemantel mindestens zwei Gehäusemantelsegmente, die jeweils über mindestens einen Temperatursensor verfügen und eine separate Einstellung der Temperatur in jedem Gehäusemantelsegmente mittels eines jeweiligen Messwertes der Temperatur des Films der Polymerschmelze im jeweiligen Gehäusemantelsegment erfolgt.

Vorzugsweise wird in der Behandlungskammer, insbesondere über einen Brüdenstutzen ein gegenüber Normalbedingungen verminderter Druck eingestellt, bevorzugt ein Druck von unterhalb 100 mbar, weiter bevorzugt von unterhalb 10 mbar, besonders bevorzugt von unterhalb 1 mbar. Dadurch können Verbindungen verbessert in gasförmigem Aggregatszustand über den mindestens einen Brüdenstutzen ausgetragen werden. Die ausgetragenen Verbindungen werden bevorzugt in einer nachgelagerten Vorrichtung zur Rückgewinnung gasförmiger Verbindungen insbesondere aus dem gasförmigem Aggregatszustand durch Kondensation und/oder Desublimation rückgewonnen.

Die Verweilzeit der Polymerschmelze im Dünnschichtbehandlungsvorrichtung beträgt vorzugsweise von 2 bis 4 min, bevorzugt von 5 bis 10 min.

Insbesondere wird die Temperatur des beheizbaren Gehäusemantels, insbesondere in jeder der Gehäusemantelsegmente auf eine geringere Temperatur als die Temperatur der in die Behandlungskammer aufgegebenen Polymerschmelze eingestellt wird, insbesondere auf eine Temperatur von 130 bis 250 °C, bevorzugt 160 bis 240 °C, insbesondere 180 bis 220 °C temperiert. Die Temperatur der Polymerschmelze wird zu diesem Zweck am Einlassstutzen bestimmt.

Vorzugsweise wird in die Atmosphäre im Innenraum der Dünnschichtbehandlungsvorrichtung (10) ein Inertgas aufgegeben, insbesondere über die Rotorwelle (34), vorzugsweise Stickstoff, getrocknete Luft und/oder Argon.

Das Einblasen von Inertgas kann insbesondere anstelle der Reduzierung des Drucks auf unter 1 mbar vorgenommen werden, hierdurch kann die Verdampfung des Monomeren durch Einleitung eines inerten Gases in den Dünnschichtverdampfer erleichtert werden. Die Anwesenheit des Inertgases wirkt dabei wie eine Drucksenkung dadurch, dass es den Partialdruck des Monomeren in der Gasphase verringert, wodurch wiederum die treibende Konzentrationsdifferenz zwischen Schmelze und Gasphase vergrößert wird. Auf diese Art und Weise kann die Entmonomerisierung z.B. Oberhalb des Tripelpunktdrucks von Lactid stattfinden bei gleichzeitig sehr guter Entmonomerisierungsleistung. Will man den Restmonomergehalt noch weiter senken, kann das Inertgas auch bei einem Druck im Dünnschichtverdampfer von weniger als 1 mbar zugegeben werden.

Dem Einlass der Dünnschichtbehandlungsvorrichtung ist bevorzugt eine Mischvorrichtung, vorzugsweise ein statischer Mischer vorgeschaltet. Hierüber können Eintrag der Polymerschmelze in die Behandlungskammer Desaktivatoren, Additive, Stabilisatoren oder Mischungen und Kombinationen hiervon in die Polymerschmelze aufgegeben werden.

Die Erfindung betrifft insbesondere ein Verfahren zur Entmonomerisierung einer PLA-Schmelze in einem Dünnschichtverdampfer. Sie ist insbesondere anwendbar auf jede Polymerschmelze, die im Wesentlichen aus Lactid-Struktureinheiten, unabhängig von der Enantiomeren-Zusammensetzung, besteht und in einer Ringöffnungspolymerisation hergestellt wurde.

Mit dem erfindungsgemäßen Verfahren lassen sich insbesondere die folgenden Vorteile erzielen.

Durch die direkte Messung der Temperatur im Inneren der Dünnschichtbehandlungsvorrichtung, insbesondere des Dünnschichtverdampfers kann die Temperatur der zu entmonomerisierenden Produkte lokal aufgelöst und kontinuierlich überwacht werden. Insbesondere bei thermisch empfindlichen oder labilen Produkten, wie PLA, können die erhaltenen Messwerte zur gezielten Einstellung der Temperaturen im beheiz- bzw. kühlbaren Mantel der Dünnschichtbehandlungsvorrichtung, insbesondere des Dünnschichtverdampfers als Stellgröße verwendet werden. So können z. B. im Produkt stattfindende unvorhersehbare Temperaturanstiege frühzeitig erkannt und kompensiert werden. Dies ermöglicht die Entmonomerisierung eines jeweiligen Produkts im optimalen Temperaturbereich, so dass einerseits eine möglichst hohe Entmonomerisierungsrate erreicht, andererseits thermische Schädigung des Produktes unterbunden werden kann.

Der Gehalt der Verbindungen im Produkt nach Durchlaufen der Dünnschichtbehandlungsvorrichtung, insbesondere des Dünnschichtverdampfers kann deutlich reduziert werden, insbesondere sind Reduktionen auf das maximal 0,2-fache, bevorzugt maximal das 0,1-fache des Gehaltes der Verbindungen vor Durchlaufen der Dünnschichtbehandlungsvorrichtung, insbesondere des Dünnschichtverdampfers erzielbar. Ein Restmonomergehalt im Produkt von weniger als 0,5 % kann erreicht werden.

Mit dem erfindungsgemäßen Verfahren ist eine äußerst schonende Behandlung des Produktes möglich. Dies ist insbesondere anhand des Gelbwertes bzw. der Gelbverfärbung ersichtlich. Das erfindungsgemäße Verfahren ermöglicht, dass die Gelbverfärbung, gemessen als b*-Wert, während der Durchführung des Verfahrens um nicht mehr als 4 Skalenwerte erhöht wird und der b*-Wert im Produkt weniger als 15 beträgt.

Die besondere Verfahrensführung ermöglicht, dass im Dünnschichtverdampfer keine Totzonen entstehen. Insbesondere dadurch können mit dem erfindungsgemäßen Verfahren die Bildung von sogenannten "Black Specks" weitestgehend verhindert werden. Insbesondere entstehen bei der Durchführung des erfindungsgemäßen Verfahrens maximal 50 Black Specks pro Kilogramm ausgetragenem Produkt. Das Produkt enthält somit weniger als 50 Black Specks pro Kilogramm.

Ein Abbau des Molekulargewichtes des Produktes, insbesondere im Fall von Polymeren und/oder Copolymeren unterbleibt dabei weitestgehend. Überraschenderweise konnte festgestellt werden, dass das gewichtsgemittelte Molekulargewicht des Produktes nach Durchführung des Verfahrens nach Entmonomerisierung maximal 20 % geringer ist als das des in den Dünnschichtverdampfer aufgegebenen Produktes.

Bevorzugte Drücke, die z.B. über den mindestens einen Brüdenstutzen an den Dünnschichtverdampfer angelegt werden können, liegen hierbei vorteilhafterweise unterhalb 100 mbar, weiter bevorzugt unterhalb 10 mbar, besonders bevorzugt unterhalb 1 mbar. Dadurch wird zuverlässig ermöglicht, dass im Produkt enthaltene volatile Verbindungen in den gasförmigen Aggregatszustand übergehen und dadurch aus dem Innenraum über den mindestens einen Brüdenstutzen ausgetragen werden und die ausgetragenen Verbindungen bevorzugt in der Vorrichtung zur Rückgewinnung gasförmiger Verbindungen insbesondere aus dem gasförmigem Aggregatszustand durch Kondensation und/oder Desublimation rückgewonnen werden. Die Entmonomerisierung wird somit insbesondere im Vakuum betrieben. Dabei gilt, je tiefer das Vakuum, desto besser die Entmonomerisierungsleistung. Typischerweise wird die Dünnschichtbehandlungsvorrichtung, vorzugsweise der Dünnschichtverdampfer bei einem Druck von weniger als 10 mbar (absolut) betrieben.

Beschrieben wird zudem ein Polylactidharz, das insbesondere gemäß dem zuvor beschriebenen Verfahren herstellbar ist. Hierzu wird in die Dünnschichtbehandlungsvorrichtung, vorzugsweise den Dünnschichtverdampfer Polylactid in viskosem Aggregatszustand über den Einlassstutzen in den Dünnschichtverdampfer eingetragen, innerhalb des Dünnschichtverdampfers wird ein Film aus Polylactid erzeugt, dabei wird zumindest ein Teil der im Produkt befindlichen Monomere, in diesem Fall Lactid, in den gasförmigen Aggregatszustand überführt und Lactid mit der Gasphase aus dem Dünnschichtverdampfer ausgetragen. Das erfindungsgemäße Produkt zeichnet sich dabei durch ein gewichtsmittleres Molekulargewicht zwischen 50.000 g/mol und 500.000 g/mol, einer Gelbfärbung gemessen als b*-Wert von weniger als 15, einem restmonomeren Gehalt von weniger als 0,5 Gew.-% und weniger als 50 BS/kg aus.

Überraschenderweise konnte festgestellt werden, dass mit dem erfindungsgemäßen Verfahren Polylactide mit äußerst hoher Güte und Qualität hergestellt werden können.

Die vorliegende Erfindung wird anhand der nachfolgenden Ausführungsformen sowie den beigefügten Figuren näher erläutert, ohne die vorliegende Erfindung jedoch auf die speziell dargestellten Parameter zu beschränken. Sämtliche der nachfolgenden Ausführungsformen sind vorteilhafte Ausführungen.

In den Figuren zeigen

Figur 1 eine Ausführungsform einer erfindungsgemäßen Dünnschichtbehandlungsvorrichtung;

Figur 2 eine weitere Ausführungsform einer erfindungsgemäßen Dünnschichtbehandlungsvorrichtung schichtbehandlungsvorrichtung;

Figur 3 eine Kombination einer erfindungsgemäßen Dünnschichtbehandlungsvorrichtung mit einem Mischelement sowie einem Kondensator bzw. Desublimator.

Im Sinne der erfolgten Erläuterungen gelten die nachfolgenden Definitionen:
**PLA:** Ein Polymer, das im Wesentlichen oder zur Gänze aus Lactid-Struktureinheiten besteht.

**Monomer:** Darunter ist hauptsächlich Dilactid, oder einfach nur Lactid, zu verstehen. Lactid ist der zyklische Diester der Milchsäure. Unter Lactid wird sowohl das L,L-Dilactid, als auch das D,D-Dilactid sowie das aus einer L- und einer D-Einheit bestehende meso-Dialctid verstanden.

**Entmonomerisierung:** Abtrennung bzw. Apparat zur Abtrennung von Monomer aus einem Polymer durch Überführen des Monomers in die Gasphase und Trennung der monomerhaltigen Gasphase vom Polymer. Neben dem Monomer sind stets weitere flüchtige Komponenten im Polymer enthalten, wie Milchsäure, zyklische und lineare Oligomere sowie Produkte des thermischen Polymerabbaus, die zusammen mit dem Monomer abgetrennt werden. Wegen ihrer im Vergleich zum Monomer niedrigen Konzentration werden sie im Text nicht weiter genannt und sind im Begriff "Monomer" stets mit enthalten.

**Dünnschichtverdampfer:** Ein senkrechte-stehender, zylinderförmiger Apparat mit innenliegendem Wischersystem, das die eintretende Polymerschmelze gleichmäßig auf die von außen temperierbare Oberfläche verteilt und nach unten fördert. Durch die Förderwirkung der Rotorblätter wird eine sich ständig erneuernde Schmelze-Oberfläche generiert. Die Verweilzeit im Apparat und die Oberflächenerneuerungsrate kann durch Verändern der Drehzahl des Rotors eingestellt werden. Der Austrag der Schmelze aus dem Apparat wird durch die im Austragskonus speziell geformte Rotor welle unterstützt.

**Temperierzone:** Bereich des Dünnschichtverdampfers in dem die Temperatur durch ein Wärmeträgermedium, das im Mantel des Dünnschichtverdampfers in dieser Zone fließt, eingestellt werden kann. Ein Dünnschichtverdampfer kann bis zu fünf voneinander unabhängige Temperierzonen besitzen.

**Tripelpunkt:** Punkt im Druck-Temperatur-Diagramm eines Reinstoffes, in dem alle drei Phasen, feste, flüssige und dampfförmige, koexistieren. Im Tripelpunkt treffen sich die Phasengrenzlinien fest/flüssig, flüssig/dampfförmig und fest/dampfförmig.

Für reines L-Lactid liegt dieser Punkt bei 96,9°C und 1,4 mbar. Im Rahmen dieser Erfindung ist dieser Wert nicht als absolut zu sehen, er hängt ab von der Zusammensetzung des Lactids in dem vorgestellten Verfahren. Sowohl der Gehalt des Lactids an den optischen Isomeren L-Lactid, meso-Lactid und D-Lactid wirkt sich auf den Tripelpunkt aus, als auch Nebenprodukte der PLA-Polymerisation, die in der Entmonomerisierung zusammen mit dem Lactid verdampfen oder sublimieren. Hier sind Milchsäure und andere zyklische oder lineare Oligomere des PLA zu nennen sowie Abbauprodukte der PLA-Polymerisation.

**Desublimieren:** Direkter Übergang eines Stoffes vom dampfförmigen Zustand in den festen Zustand bei Drücken und Temperaturen unterhalb des Tripelpunkts, d. h. ohne dazwischen den flüssigen Zustand zu durchlaufen. Die Umkehrung von Sublimieren.

**Stabilisierung:** Um zu verhindern, dass sich das Monomere nach Polymerisation und Entmonomerisierung zurückbildet und so die Produktqualität verschlechtert, muss der Katalysator für die Ringöffnungspolymerisation durch Zugabe von geeigneten Additiven desaktiviert werden. Geeignete Substanzen zur Stabilisierung sind in der einschlägigen Literatur beschrieben.

**Black Specks (schwarze Stippen):** Kleine Feststoffpartikel, zumeist auf Kohlenstoffbasis, die durch Abbau des Polymeren aufgrund langer Verweilzeiten bei hohen Temperarturen entstehen und einen (gemittelten) Durchmesser von mehr als 100 Mikrometern besitzen, so dass sie mit bloßem Auge im Produkt zu erkennen sind. Produziert ein Apparat zur Verarbeitung von Polymeren Black Specks, ist dies Indiz für Totzonen innerhalb des Apparats, d.h. für Bereiche die nicht durchströmt werden und in denen sich Polymer ablagern und degradieren kann. Das degradierte Polymere wird von dann von Zeit zu Zeit als Black Speck mit dem Polymeren aus dem Apparat gewaschen.

Die Erfindung betrifft insbesondere ein Verfahren zur Entmonomerisierung einer PLA-Schmelze in einem Dünnschichtverdampfer. Sie ist anwendbar auf jede Polymerschmelze, die im Wesentlichen aus Lactid-Struktureinheiten, unabhängig von der Enantiomeren-Zusammensetzung, besteht und in einer Ringöffnungspolymerisation hergestellt wurde.

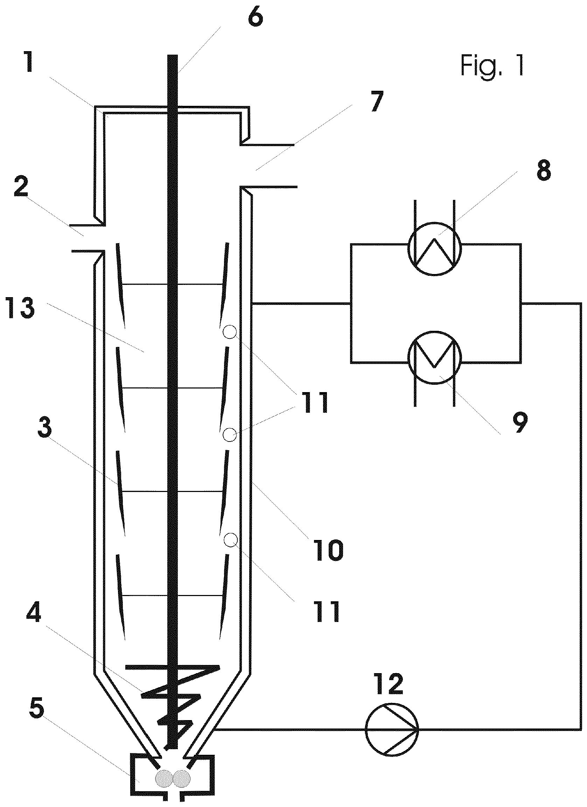

Figur 1 zeigt ein Ausführungsbeispiel einer erfindungsgemäßen Dünnschichtbehandlungsvorrichtung in Form eines Dünnschichtverdampfers 1, wie sie beim erfindungsgemäßen Verfahren eingesetzt wird. In diesem Dünnschichtverdampfer 1 kann über einen Einlassstutzen 2 beispielsweise monomerhaltiges PLA, insbesondere direkt nach der kontinuierlichen Polymerisation als flüssige bzw. viskose Schmelze kontinuierlich in den Dünnschichtverdampfer 1 eingetragen werden. Das schmelzflüssige viskose PLA wird in der Behandlungskammer 13 des Dünnschichtverdampfers 1 von Wischerblättern 3, die mit einer zentralen Rotorwelle 6 verbunden sind, gleichmäßig auf die temperierbare innere Oberfläche der Behandlungskammer 13 verteilt und dabei nach unten transportiert wird. Der Apparat zeichnet sich weiter dadurch aus, dass die zentrale Rotorwelle 6 im konischen Auslassbereich mit speziell geformten Förderelementen 4, z.B. eine Förderschnecke bestückt ist, die die zähflüssige Schmelze in den Einzugsbereich der Austragspumpe 5 drücken. Die Austragspumpe 5 ist dabei eine Zahnradpumpe mit speziell geformtem, sehr weitem Einzugsbereich. Die Wischerblätter 3 und die Austragsschnecke 4 sind dabei so konstruiert, dass eine Verweilzeit der Schmelze von 20 min im gesamten Dünnschichtverdampfer nicht überschritten wird und keine Totzonen, die zur Degradierung des Produkts führen, entstehen. Das aus der Schmelze abgedampfte Monomer wird über den Brüdenstutzen 7 im Gegenstrom zum Schmelzefluss aus dem Dünnschichtverdampfer 1 abgezogen. Die Temperierung des Apparates geschieht durch ein Wärmeträgermedium, das im Mantel 10 des Dünnschichtverdampfers 1 mittels einer Pumpe 12 zirkuliert wird und dessen Temperatur eingestellt werden kann. Der Dünnschichtverdampfer 1 verfügt dabei über mindestens ein Gehäusemantelsegment 10. Die Temperatur des Wärmeträgermediums muss dabei sowohl aktiv durch eine Heizung 8 erhöht, wie auch aktiv durch einen Kühler 9 gekühlt werden können. Die Heizung 8 wird vor allem für den Anfahrvorgang benötigt, damit der Dünnschichtverdampfer 1 auf Prozesstemperatur (180°C - 220°C) geheizt werden kann. Die Kühlung 9 ist ein wesentliches Element für den Betrieb. Sie sorgt dafür, dass die Produkttemperatur während der Entmonomerisierung nicht zu stark ansteigt und das Produkt nicht geschädigt wird. Der Dünnschichtverdampfer 1 verfügt dabei über drei Temperatursensoren 11. Bei Betrieb des Dünnschichtverdampfers tauchen die Temperatursensoren 11 dabei in den Film des Produktes ein. Somit kann an unterschiedlichen Stellen des Produktgemisches fortwährend die Temperatur überwacht werden. Über die zentrale Rotorwelle 6 kann zudem Inertgas zur Verbesserung der Entmonorisierungsleistung in die Behandlungskammer 13 gegeben werden.

Die Entmonomerisierung wird im Vakuum betrieben. Dabei gilt, je tiefer das Vakuum, desto besser die Entmonomerisierungsleistung. Typischerweise wird der Dünnschichtverdampfer bei einem Druck von weniger als 10 mbar (absolut) betrieben.

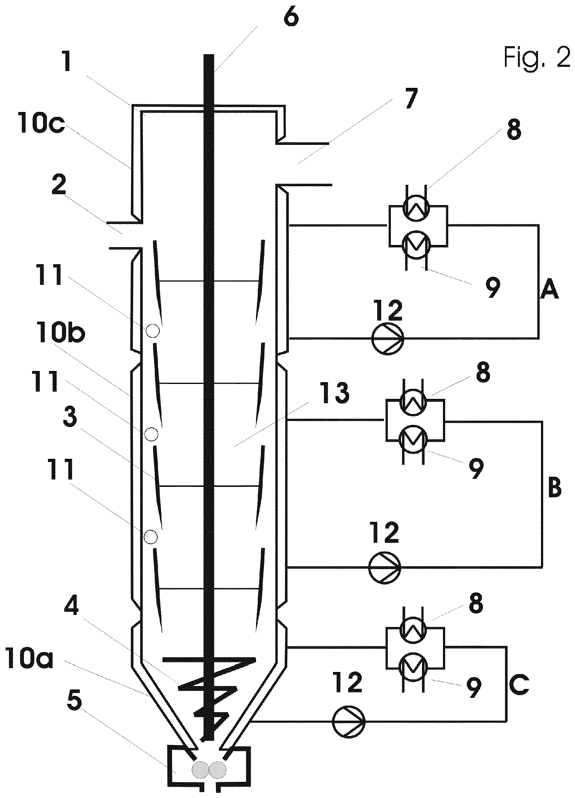

Eine weitere Ausführungsform einer erfindungsgemäßen Dünnschichtbehandlungsvorrichtung ist in Figur 2 gezeigt. Der Dünnschichtverdampfer 1 ist dabei im Wesentlichen identisch mit Figur 1, als einziger und wesentlicher Unterschied ist dabei zu benennen, dass der Kühl- bzw. Temperiermantel drei separat temperierbare Gehäusemantelsegmente 10a, 10b und 10c umfasst. Diese einzelnen Gehäusemantelsegmente 10a, 10b und 10c werden jeweils über einen separaten Kreislauf A, B und C zur Temperierung der jeweiligen Gehäusemantelsegmente 10a, 10b und 10c des Heiz- bzw. Kühlmantels 10 des Dünnschichtverdampfers 1 versorgt. Somit können an unterschiedlichen vertikalen Stellen des Dünnschichtverdampfers 1 unterschiedliche Temperaturbereiche gewählt bzw. gezielte Temperaturgradienten über den gesamten Dünnschichtverdampfer 1 eingestellt werden. Jeder Kühl- bzw. Heizkreislauf A, B und C für die einzelnen Gehäusemantelsegmente 10a, 10b und 10c des temperierten Mantels 10 des Dünnschichtverdampfers 1 verfügt dabei über eine separate Pumpe 12 sowie Heizelemente 8 bzw. Kühlelemente 9. Die Gehäusemantelsegmente 10b und 10c verfügen dabei über Temperatursensoren 11; im Gehäusemantelsegment 10b sind beispielsweise zwei Temperatursensoren untergebracht, im Gehäusemantelsegment 10c ein weiterer Temperatursensor 11. Das Gehäusemantelsegmente 10a (Austragszone) verfügt über keinen Temperatursensor. Weiterhin kann vorgesehen sein, dass das Gehäusemantelsegment 10c eine weitere Unterteilung erfährt, so kann beispielsweise vorgesehen sein, den Teil unterhalb des Eintragsstutzens 2 separat zu temperieren, während der Teil oberhalb des Eintragsstutzens 2, in dem sich der Brüdenstutzen 7 befindet, ebenso über einen separaten Temperierkreislauf verfügt. In diesem Falle kann dann vorgesehen sein, dass im oberen Gehäusemantelsegment (Temperierzone) kein Temperatursensor vorhanden ist, während, in der separaten, unterhalb des Eintragsstutzens 2 ausgebildeten Gehäusemantelsegment ein Temperatursensor vorhanden 11 ist.

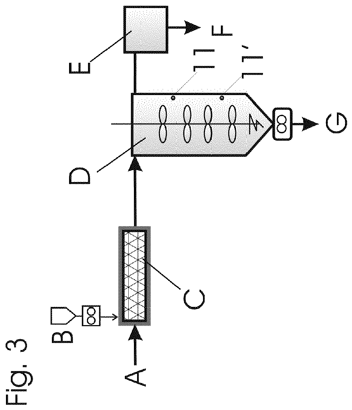

Figur 3 zeigt eine Ausgestaltung des erfindungsgemäßen Dünnschichtverdampfers dem ein statischer Mischer C vorgeschaltet ist sowie eine Vorrichtung zur Kondensation E der ausgetragenen gasförmigen Verbindungen nachgeschaltet ist. Der Dünnschichtverdampfer umfasst dabei zwei Temperatursensoren 11. Der statische Mischer C ist dabei mit dem Einlass für Produkt (siehe Bezugszeichen 2 in Figur 1) verbunden, während die Kondensationsvorrichtung E mit dem Brüdenstutzen (siehe Bezugszeichen 7 in Figur 1) des Dünnschichtverdampfers verbunden ist.

In den Mischer C wird Polylactidschmelze A, eingetragen. Im statischen Mischer C kann dabei eine Zudosierung von Additiven B, insbesondere Stabilisatoren zur Desaktivierung eines gegebenenfalls noch in der Polylactidschmelze enthaltenen Katalysators aufgegeben werden. Hierdurch wird eine weitere Reaktion der Polylactidschmelze im statischen Mischelement C und/oder im Dünnschichtverdampfer D unterbunden. Ausgetragene gasförmige Verbindungen, insbesondere Lactid, können in einer nachgeschalteten Kondensationsvorrichtung E kondensiert werden und das Monomer somit flüssig der Kondensationsvorrichtung E entnommen werden (Bezugszeichen F).

Der Dünnschichtverdampfer gemäß Figur 3 umfasst dabei zwei Temperatursensoren 11 und 11', die entsprechend den Ausführungsformen der Dünnschichtverdampfer nach den voranstehend beschriebenen Figuren ausgebildet sind.

Solange der Druck oberhalb des Tripelpunktdrucks von Dilactid (1,4 mbar) liegt, kann die Rückgewinnung des Monomeren (F) durch Kondensation (E) geschehen. Zur Erreichung besonders niedriger Restmonomerwerte in der Schmelze ist aber die Betrieb bei einem Druck unter 1 mbar notwendig. In diesem Fall muss das Dilactid mittels Desublimation (E) zurückgewonnen werden.

Anstelle der Reduzierung des Drucks auf unter 1 mbar kann die Verdampfung des Monomeren durch Einleitung eines inerten Gases in den Dünnschichtverdampfer erleichtert werden. Die Anwesenheit des Inertgases wirkt dabei wie eine Drucksenkung dadurch, dass es den Partialdruck des Monomeren in der Gasphase verringert, wodurch wiederum die treibende Konzentrationsdifferenz zwischen Schmelze und Gasphase vergrößert wird. Auf diese Art und Weise kann die Entmonomerisierung oberhalb des Tripelpunktdrucks von Dilactid stattfinden bei gleichzeitig sehr guter Entmonomerisierungsleistung. Will man den Restmonomergehalt noch weiter senken, kann das Inertgas auch bei einem Druck im Dünnschichtverdampfer von weniger als 1 mbar zugegeben werden.

Schließlich ist es zur Erlangung möglichst niedriger Restmonomerwerte notwendig, den Stabilisator(B) zur Desaktivierung des Katalysators vor der Dünnschichtverdampfung (D) in die Schmelze (A) unterzumischen. Das Vermischen von Stabilisator und Schmelze erfolgt aus wirtschaftlichen Gründen am besten in einem statischen Mischer (C). Eine Zugabe nach der Entmonomerisierung (G), wie in EP 2698394 oder auch in EP 1070097 beschrieben, ist nicht ausreichend, um den Monomergehalt um mindestens den Faktor 5 in der Schmelze zu senken.

**Bezugszeichenliste**

| | |
|---|---|
| 1 | Dünnschichtbehandlungsvorrichtung; Dünnschichtverdampfer |
| 2 | Einlassstutzen |
| 3 | Rotorblatt; Wischerblattelement |
| 4 | Förderelement |
| 5 | Austragspumpe |
| 6 | Rotorwellenkörper |
| 7 | Brüdenstutzen |
| 8 | Heizung |
| 9 | Kühlung |

| 10 (a,b,c) | Gehäusemantelsegmente |
| 11 | Temperatursensoren |
| 12 | Pumpe |
| 13 | Behandlungskammer |

Die vorliegende Erfindung wird anhand der nachfolgenden Versuche beispielhaft näher erläutert.

**Analytische Methoden:**

*Restmonomergehalt im PLA:*

Die PLA-Probe wird in Chloroform gelöst und mit Isopropanol gefällt. Das gefällte PLA wird abfiltriert, dabei verbleiben die niedermolekularen Bestandteile in der Lösung. Nach Zugabe von Pentamethylbenzol als internem Standard wird die Lösung im Gaschromatographen auf einer Kapillarsäule DB-5; 15/0,32 in ihre Bestandteile getrennt und Lactid mit einem Flammenionisationsdetektor quantitativ detektiert.

*Molekulargewicht (Gewichtsmittel):*

Die abgewogene Polymermenge wird in einem definierten Volumen Chloroform gelöst. In einem Ubbelohde-Kapillarviskosimeter, das sich in einem auf 20°C +/- 0,1°C eingestellten thermostatisierten Wasserbad befindet, wird die Durchlaufzeit der Lösung und des reinen Lösungsmittels gemessen. Der Quotient aus beiden ist die relative Lösungsviskosität. Sie wird mit der Einpunktmethode nach J. Dorgan et al., J. Polym. Sci.: Part B: Polym. Physics, Vol. 43,3100-3111 (2005), in die intrinsische Viskosität (I.V.) umgerechnet. Die I.V. steht mit dem Gewichtsmittel der Molmasse des Polymers in Verbindung, die mit der sog. Mark-Houwink-Gleichung beschrieben wird. Für das Stoffpaar PLA/Chloroform lautet die Gleichung (J. Dorgan, a.a.O.):

$$I.V. = K * M_w^a,$$

mit K = 1,53 * 10-4, a = 0,759

*L \*a\*b\*Farbraum:*

Die Bestimmung der Farbwerte geschieht an zu Pulver gemahlenen, amorphen Polymer. Das Polymer kann entweder als Stränge (vor der Entmonomerisierung) oder als amorphes Granulat (nach der Entmonomerisierung)vorliegen. Die Farbwerte des L\*a\*b\*-Farbraums werden mithilfe eines Farb-Spektrophotometers gemessen, das gegen einen Weißstandard kalibriert ist. Das Licht aus einer Standard-Lichtquelle wird von dem zu Pulver gemahlenen Polymer reflektiert. Die Intensität der reflektierten Strahlung wird von einer Photozelle bestimmt. Der L\*-Wert gibt die Helligkeit an. Die Farbe des Probenmaterials wird durch zwei Achsen beschrieben, wobei die b\*-Werte die Verfärbung in Richtung blau (negativer b\*-Wert) oder gelb (Positiver b\*-wert) anzeigt. Der a\*-Wert gibt die Rot- bzw. Grüntönung an.

**Beispiele**

**Beispiel 1:** Entmonomerisierung einer PLA-Schmelze mit niedrigem Molekulargewicht in einem erfindungsgemäßen Dünnschichtverdampfer

In einer Pilotanlage wird Dilactid in einer Kombination aus Rührkessel und Rohrreaktor zu PLA polymerisiert, wie es zum Beispiel in EP 2188047 beschrieben ist. Anschließend wird in einem statischen Mischer ein Stabilisator zur Desaktivierung des Katalysators untergemischt. Das Molekulargewicht des Polymeren beträgt nach dem Rohrreaktor 171.000 g/mol und der Monomergehalt 4,8%. Der b\*-Farbwert wurde mit 5,4 ermittelt. Die Temperatur am Eintritt beträgt 186°C. Die Schmelze tritt in einen Dünnschichtverdampfer ein, der mit 4 Temperierzonen ausgestattet ist. An der Rührerwelle sind zwei Temperaturmessstellen '11 angebracht, die die Temperatur der Schmelze im Dünnschichtverdampfer direkt messen können. Der Temperatursensor 11 ist dabei auf Höhe der zweiten temperierten Zone angeordnet, die sich der Eintragszone (mit Einlass für das Produkt) unten anschließt. Der zweite Temperatursensor 11' ist auf Höhe der dritten temperierten Zone (unterhalb der zweiten Zone) angeordnet. Eintrags- und Austragszonen verfügen nicht über Temperatursensoren. Die Vorlauf-Temperaturen der Wärmeträgermedien wurden in allen 4 Temperierzonen auf 192°C eingestellt. Im stationären Zustand stellte sich an der oberen Temperaturmessstelle 11 eine Produkttemperatur von 203°C und an der unteren Temperaturmessstelle 11 eine Produkttemperatur von 205°C ein. Nach der Entmonomerisierung wurde ein Monomergehalt von 0,16% gemessen. Das Molekulargewicht betrug 168.000 g/mol und der b*-Farbwert war unverändert. Die Zahlenwerte sind in der untenstehenden Tabelle zusammengefasst.

**Beispiel 2:** Entmonomerisierung einer PLA-Schmelze mit hohem Molekulargewicht in einem erfindungsgemäßen Dünnschichtverdampfer

Das Vorgehen aus Beispiel wurde wiederholt. Es wurde jedoch ein höher viskoses PLA produziert, wodurch sich die Schmelze im Dünnschichtverdampfer stärker erwärmt. Zur Kompensation wurden die Temperaturen in den Temperierzonen reduziert. Die Ergebnisse sind in der Tabelle zusammengefasst.

Aus Bsp. 1 und 2 wird deutlich, dass kein merklicher Molekulargewichtsabbau und keine Erhöhung des b*-Farbwertes unter diesen Bedingungen stattfinden.

**Beispiel 3:** Entmonomerisierung einer PLA-Schmelze mit hohem Molekulargewicht in einem erfindungsgemäßen Dünnschichtverdampfer ohne Kühlung

Das Vorgehen aus Bsp. 2 wurde wiederholt, nur dass die Temperatur in den Temperierzonen auf 210°C eingestellt wurde. Dadurch erhöhte sich die Schmelzetemperatur auf 231°C. Wie man aus den Daten in der Tabelle erkennt, fand ein merklicher Molekulargewichtsabbau statt und der b*-Farbwert ist von 6,4 auf 8,2 angestiegen. Außerdem ist der Restmonomergehalt höher als in den beiden vorangegangen Beispielen. Dies zeigt, dass ohne ausreichende Temperaturkontrolle im Dünnschichtverdampfer eine Produktverschlechterung bei der Entmonomerisierung im Dünnschichtverdampfer stattfindet.

**Beispiel 4:** Einfluss des Stabilisators auf den Monomergehalt

Das Vorgehen aus Bsp. 2 wurde wiederholt, nur dass kein Stabilisator vor der Entmonomerisierung dosiert wurde. Wie aus den Daten der Tabelle ersichtlich, steigt der Monomergehalt nach der Dünnschichtverdampfung auf über 1,5 % an. Der Monomergehalt wird somit nur um den Faktor 2,7 reduziert. Die Stabilisierung der PLA-Schmelze muss somit zwingend vor der Entmonomerisierung geschehen.

Tabelle

|  |  | Bsp 1 | Bsp 2 | Bsp 3 | Bsp 4 |
|---|---|---|---|---|---|
| Eintritt | Monomergehalt | 4,8 | 5,2 | 5,0 | 4,9 |
|  | Molekulargewicht | 171.000 | 230.000 | 239.000 | 222.000 |
|  | Temperatur | 186°C | 186°C | 186°C | 190°C |
|  | b*-Farbwert | 5,4 | 6,2 | 6,4 | 6,8 |
|  | Vorlauftemperatur[1] | 192°C | 190°C | 210° | 195°C |
|  | Produkttemperatur[2] | 203°C | 208°C | 226°C | 209°C |
|  | Produkttemperatur[3] | 205°C | 213°C | 231°C | 213°C |
| Austritt | Monomergehalt | 0,16 % | 0,18 % | 0,31 % | 1,42 % |
|  | Molekulargewicht | 168.000 | 227.000 | 220.000 | 219.000 |
|  | b*-Farbwert | 5,4 | 6,5 | 8,2 | 6,9 |

[1] Vorlauftemperatur des Wärmeträgermediums in allen vier Temperaturzonen
[2] Produkttemperatur in der zweiten Temperierzone (Sensor 11)
[3] Produkttemperatur in der dritten Temperierzone (Sensor 11')

**Patentansprüche**

1. Verfahren zur Abtrennung von Verbindungen in gasförmigem Aggregatszustand aus einer diese Verbindungen in flüssigem oder festem Aggregatszustand enthaltenden Polymerschmelze, die Polylactid und/oder ein Poly(co)lactid beinhaltet, mit einer Dünnschichtbehandlungsvorrichtung (1), umfassend

- ein Gehäuse mit einem beheizbaren und/oder kühlbaren Gehäusemantel, welcher eine sich in axialer Richtung erstreckende rotationssymmetrische Behandlungskammer (13) umschließt,
- mindestens einen in einem Einlassbereich des Gehäuses angeordneten Einlassstutzen (2) zum Einführen des zu behandelnden Materials in die Behandlungskammer (13),
- mindestens einen in einem Auslassbereich des Gehäuses angeordneten Auslassstutzen zum Austragen des Materials aus der Behandlungskammer (13), und
- eine in der Behandlungskammer (13) angeordnete und sich koaxial erstreckende, antreibbare Rotorwelle zur Erzeugung eines Materialfilms auf der Innenfläche des Gehäusemantels und zur Förderung des Materials in Richtung vom Einlassbereich zum Auslassbereich hin, wobei die Rotorwelle einen zentralen Rotorwellenkörper (6) und auf dessen Umfang angeordnete Rotorblätter (3) umfasst, deren radial äußerstes Ende von der Innenfläche des Gehäusemantels (10) beabstandet ist, sowie
- mindestens einen in der Behandlungskammer (13) angeordneten Temperatursensor (11) zur Messung der Temperatur des Materialfilms,
bei dem
die Polymerschmelze in viskosem Aggregatszustand über den mindestens einen Einlassstutzen (2) in die Behandlungskammer (13) eingetragen wird,
auf der Innenfläche des Gehäusemantels (10) ein Film der Polymerschmelze erzeugt wird,
wobei zumindest ein Teil der in der Polymerschmelze in flüssigem oder festem Aggregatszustand enthaltenen Verbindungen in den gasförmigem Aggregatszustand überführt und im gasförmigem Aggregatszustand aus der Dünnschichtbehandlungsvorrichtung (1) ausgetragen wird, sowie

die behandelte Polymerschmelze über den mindestens einen Auslassstutzen aus der Dünnschichtbehandlungsvorrichtung (1) ausgetragen wird,

**dadurch gekennzeichnet, dass**

mittels des mindestens einen Temperatursensors (11) an mindestens einer Stelle eine permanente oder temporäre Bestimmung eines lokalen Temperaturwertes des Films des Produktes durchgeführt wird.

2. Verfahren nach Anspruch 1, der bestimmte Temperaturwert mit einem Sollwert verglichen und abhängig von der Abweichung vom Sollwert mindestens ein Prozessparameter geregelt wird.

3. Verfahren nach vorhergehendem Anspruch, **dadurch gekennzeichnet, dass** abhängig von der Abweichung vom Sollwert die an der entsprechenden Stelle in die Polymerschmelze einzutragende bzw. abzuführende Wärmemenge geregelt wird.

4. Verfahren nach einem der beiden vorhergehenden Ansprüche, **dadurch gekennzeichnet, dass** die in die Polymerschmelze einzutragende bzw. abzuführende Wärmemenge mindestens teilweise über die in den Gehäusemantel einzutragende bzw. abzuführende Wärmemenge und/oder über die Drehgeschwindigkeit der Rotorwelle geregelt wird.

5. Verfahren nach einem der vorhergehenden Ansprüche, **dadurch gekennzeichnet, dass** die abzutrennenden Verbindungen ausgewählt sind aus der Gruppe bestehend aus Lactid, Milchsäure, Milchsäuredimeren und bei den gegebenen Prozessbedingungen gasförmig vorliegenden Milchsäureoligomeren, Wasser und Additive der Polymersynthese, wie z.B. Katalysatoren, Initiatoren oder Stabilisatoren sowie Kombinationen hiervon.

6. Verfahren nach einem der vorhergehenden Ansprüche, **dadurch gekennzeichnet, dass** die Dünnschichtbehandlungsvorrichtung (1) in Form eines Dünnschichtverdampfers, eines Dünnschichttrockners oder eines Dünnschichtreaktors ausgebildet ist.

7. Verfahren nach einem der vorhergehenden Ansprüche, **dadurch gekennzeichnet, dass** dem mindestens einen Temperatursensor (11) eine Signalleitung zugeordnet ist, mittels der das mit dem mindestens einen Temperatursensor (11) ermittelte Signal zu einer externen Signalverarbeitungsvorrichtung geleitet wird.

8. Verfahren nach einem der vorhergehenden Ansprüche, mehrere Temperatursensoren (11) vorliegen, welche über die Länge der Behandlungskammer (13) verteilt angeordnet sind.

9. Verfahren nach einem der vorhergehenden Ansprüche, **dadurch gekennzeichnet, dass**
die Rotorblätter (3) mit einer Rotationsgeschwindigkeit von 0,1 bis 10 m/s, bevorzugt 0,5 bis 3 m/s, besonders bevorzugt von 0,5 bis 2 m/s betrieben werden und/oder
mittels der Rotorblätter (3) eine Scherrate von maximal 1000 1/s, bevorzugt 100 bis 500 1/s, besonders bevorzugt 200 bis 300 1/s eingestellt wird, wobei die Scherrate der Quotient aus Umlaufgeschwindigkeit und Abstand der Rotorblätter (3) von der Innenwand Behandlungskammer (13) ist.

10. Verfahren nach einem der vorhergehenden Ansprüche, **dadurch gekennzeichnet, dass** im Innern des Gehäusemantels ein Gehäusemantelhohlraum ausgebildet sind, welcher zum Zwecke der Beheizung und/oder Kühlung von einem Wärmeträgermedium durchströmt wird.

11. Dünnschichtbehandlungsvorrichtung nach einem der vorhergehenden Ansprüche, **dadurch gekennzeichnet, dass** der Gehäusemantel mindestens zwei Gehäusemantelsegmente (10a, 10b) umfasst, welche unabhängig voneinander beheizt und/oder gekühlt zu werden.

12. Verfahren nach vorhergehendem Anspruch, **dadurch gekennzeichnet, dass** die Gehäusemantelsegmente (10a, 10b) jeweils eine entsprechende Behandlungskammerzone umschließen und die Temperatursensoren (11) auf verschiedene Behandlungskammerzonen verteilt sind.

13. Verfahren nach einem der vorhergehenden Ansprüche, **dadurch gekennzeichnet, dass** der erhaltene Temperaturwert der Polymerschmelze zur Einstellung der Temperatur des beheizbaren und/oder kühlbaren Gehäusemantels auf einen vorbestimmten Sollwert verwendet wird, insbesondere der Gehäusemantel mindestens zwei Gehäusemantelsegmente (10a, 10b), die jeweils über mindestens einen Temperatursensor (11) verfügen und eine separate Einstellung der Temperatur in jedem Gehäusemantelsegmente (10a, 10b) mittels eines jeweiligen Messwertes der Temperatur des Films der Polymerschmelze im jeweiligen Gehäusemantelsegment (10a, 10b) erfolgt.

14. Verfahren nach einem der vorhergehenden Ansprüche, **dadurch gekennzeichnet, dass**
die Viskosität der eingetragenen Polymerschmelze mindestens 300 Pa s, bevorzugt mindestens 500 Pa·s, besonders bevorzugt 1000 bis 6000 Pa·s beträgt, wobei die Viskosität mittels dem in der Beschreibung angegebenen Verfahren bestimmt wird,
in der Behandlungskammer (13), insbesondere über einen Brüdenstutzen (7) ein gegenüber Normalbedingungen verminderter Druck eingestellt wird, bevorzugt ein Druck von unterhalb 100 mbar, weiter bevorzugt von unterhalb 10 mbar, besonders bevorzugt von unterhalb 1 mbar und dadurch Verbindungen in gasförmigem Aggregatszustand über den mindestens einen Brüdenstutzen ausgetragen werden und die ausgetragenen Verbindungen bevorzugt in einer nachgelagerten Vorrichtung zur Rückgewinnung gasförmiger Verbindungen insbesondere aus dem gasförmigem Aggregatszustand durch Kondensation und/oder Desublimation rückgewonnen werden,
die Verweilzeit der Polymerschmelze im Dünnschichtbehandlungsvorrichtung (1) von 2 bis 4 min, bevorzugt von 5 bis 10 min beträgt und/oder
die Temperatur des beheizbaren Gehäusemantels, insbesondere in jeder der Gehäusemantelsegmente (10a, 10b) auf eine geringere Temperatur als die Temperatur der in die Behandlungskammer (13) aufgegebenen Polymerschmelze eingestellt wird, insbesondere auf eine Temperatur von 130 bis 250 °C, bevorzugt 160 bis 240 °C, insbesondere 180 bis 220 °C temperiert wird.

15. Verfahren nach einem der vorhergehenden Ansprüche, **dadurch gekennzeichnet, dass** vor Eintrag der Polymerschmelze in die Behandlungskammer (13) Desaktivatoren, Additive, Stabilisatoren oder Mischungen und Kombinationen hiervon in die Polymerschmelze aufgegeben werden, bevorzugt über eine vor die Dünnschichtbehandlungsvorrichtung (1) vorgeschaltete Mischvorrichtung, die insbesondere ein statischer Mischer ist.

16. Verfahren nach einem der vorhergehenden Ansprüche, **dadurch gekennzeichnet, dass** in die Atmosphäre im Innenraum der Dünnschichtbehandlungsvorrichtung (1) ein Inertgas aufgegeben wird, vorzugsweise Stickstoff, getrocknete Luft und/oder Argon.

17. Verfahren nach einem der vorhergehenden Ansprüche, **dadurch gekennzeichnet, dass** es so geführt wird, dass der Gehalt der Verbindungen in der Polymerschmelze nach Durchlaufen der Dünnschichtbehandlungsvorrichtung (1) maximal das 0,2-fache, bevorzugt maximal das 0,1-fache des Gehalts der Verbindungen vor Durchlaufen der Dünnschichtbehandlungsvorrichtung (1) beträgt, insbesondere der Restlactidgehalt in der Polymerschmelze nach Durchlaufen der Dünnschichtbehandlungsvorrichtung (1) kleiner als 0,5 % beträgt.
die Gelbverfärbung der Polymerschmelze, gemessen als b*-Wert, während der Durchführung des Verfahrens um nicht mehr als 4 Skalenwerte erhöht wird, wobei die Gelbfärbung mittels dem in der Beschreibung angegebenen Verfahren bestimmt wird,
die Gelbfärbung der Polymerschmelze, gemessen als b*-Wert, nach Durchlaufen des Dünnschichtverdampfers weniger als 15 beträgt, während des Verfahrens maximal 50 Black Specks pro Kilogramm ausgetragener Polymerschmelze entstehen, und/oder das gewichtsgemittelte Molekulargewicht der Polymerschmelze nach Durchführung des Verfahrens nach Entmonomerisierung maximal 20 % geringer ist als das gewichtsgemittelte Molekulargewicht der in die Dünnschichtbehandlungsvorrichtung (1) aufgegebene Polymerschmelze, wobei das gewichtsgemittelte Molekulargewicht mittels dem in der Beschreibung angegebenen Verfahren bestimmt wird.

**Claims**

1. A method for separating off compounds in gaseous aggregate state from a polymer melt which contains these compounds in liquid or solid aggregate state and which contains polylactide and/or a poly(co)lactide, with a thin-film treatment apparatus (1), comprising

   - a housing with a heatable and/or coolable housing casing which encloses a rotationally symmetrical treatment chamber (13) extending in the axial direction,
   - at least one inlet port (2) arranged in an inlet region of the housing, for introducing the material to be treated into the treatment chamber (13),
   - at least one outlet port arranged in an outlet region of the housing, for discharging the material from the treatment chamber (13), and

- a drivable rotor shaft arranged in the treatment chamber (13) and extending coaxially therewith for producing a film of material on the inner surface of the housing casing and for conveying the material in the direction from the inlet region towards the outlet region, wherein the rotor shaft comprises a central rotor shaft body (6) and rotor blades (3) arranged on the periphery of said rotor shaft body, the radially outermost ends of which blades are spaced apart from the inner surface of the housing casing (10), and also

- at least one temperature sensor (11) arranged in the treatment chamber (13) for measuring the temperature of the film of material,

in which

the polymer melt in a viscous aggregate state is introduced into the treatment chamber (13) by way of the at least one inlet port (2),

a film of the polymer melt is produced on the inner surface of the housing casing (10),

wherein at least a portion of the compounds contained in the polymer melt in liquid or solid aggregate state is converted into the gaseous aggregate state and is discharged from the thin-film treatment apparatus (1) in the gaseous aggregate state, and also

the treated polymer melt is discharged from the thin-film treatment apparatus (1) by way of the at least one outlet port,

**characterised in that**

a permanent or temporary determination of a local temperature value of the film of the product is carried out at at least one point by means of the at least one temperature sensor (11).

2. A method according to Claim 1, the determined temperature value is compared with a desired value and at least one process parameter is regulated dependent on the deviation from the desired value.

3. A method according to the preceding claim, **characterised in that** the amount of heat to be introduced into the polymer melt or to be dissipated at the corresponding point is regulated dependent on the deviation from the desired value.

4. A method according to one of the preceding two claims, **characterised in that** the amount of heat to be introduced into the polymer melt or to be dissipated is regulated at least partly by way of the amount of heat to be introduced into the housing casing or to be dissipated and/or by way of the speed of rotation of the rotor shaft.

5. A method according to one of the preceding claims, **characterised in that** the compounds to be separated off are selected from the group consisting of lactide, lactic acid, lactic acid dimers, and lactic acid oligomers which are present in gaseous state under the prevailing process conditions, water and additives of polymer synthesis, such as catalysts, initiators or stabilisers and also combinations thereof.

6. A method according to one of the preceding claims, **characterised in that** the thin-film treatment apparatus (1) is in the form of a thin-film evaporator, a thin-film dryer or a thin-film reactor.

7. A method according to one of the preceding claims, **characterised in that** a signal line is associated with the at least one temperature sensor (11), by means of which signal line the signal ascertained with the at least one temperature sensor (11) is conducted to an external signal processing device.

8. A method according to one of the preceding claims, a plurality of temperature sensors (11) are present which are arranged distributed over the length of the treatment chamber (13).

9. A method according to one of the preceding claims, **characterised in that**
the rotor blades (3) are operated at a speed of rotation of 0.1 to 10 m/s, preferably 0.5 to 3 m/s, particularly preferably of 0.5 to 2 m/s, and/or
a shear rate of at most 1000 1/s, preferably 100 to 500 1/s, particularly preferably 200 to 300 1/s, is set by means of the rotor blades (3), the shear rate being the quotient of the rotational speed and distance of the rotor blades (3) from the inner wall treatment chamber (13).

10. A method according to one of the preceding claims, **characterised in that** a housing casing cavity are formed in the interior of the housing casing, through which a heat transfer medium flows for the purpose of heating and/or cooling.

11. A thin-film treatment apparatus according to one of the preceding claims, **characterised in that** the housing casing comprises at least two housing casing segments (10a, 10b) which to be heated and/or cooled independently of each other.

12. A method according to the preceding claim, **characterised in that** the housing casing segments (10a, 10b) in each case encompass a corresponding treatment chamber zone and the temperature sensors (11) are distributed over various treatment chamber zones.

13. A method according to one of the preceding claims, **characterised in that** the resulting temperature value of the polymer melt is used for setting the temperature of the heatable and/or coolable housing casing to a predetermined desired value, in particular the housing casing at least two housing casing segments (10a, 10b) which in each case have at least one temperature sensor (11), and separate setting of the temperature in each housing casing segments (10a, 10b) takes place by means of a respective measured value of the temperature of the film of the polymer melt in the respective housing casing segment (10a, 10b).

14. A method according to one of the preceding claims, **characterised in that** the viscosity of the introduced polymer melt is at least 300 Pa·s, preferably at least 500 Pa·s, particularly preferably 1000 to 6000 Pa·s, the viscosity being determined by means of the method given in the description,
in the treatment chamber (13), in particular by way of a vapour port (7) a pressure which is reduced compared with normal conditions is set, preferably a pressure of below 100 mbar, further preferably of below 10 mbar, particularly preferably of below 1 mbar and thereby compounds in the gaseous aggregate state are discharged by way of the at least one vapour port and the discharged compounds are preferably recovered in a downstream device for recovering gaseous compounds in particular from the gaseous aggregate state by condensation and/or desublimation,
the residence time of the polymer melt in the thin-film treatment apparatus (1) is from 2 to 4 min, preferably from 5 to 10 min, and/or
the temperature of the heatable housing casing, in particular in each of the housing casing segments (10a, 10b), is set to a lower temperature than the temperature of the polymer melt charged into the treatment chamber (13), in particular is controlled to a temperature of 130 to 250°C, preferably 160 to 240°C, in particular 180 to 220°C.

15. A method according to one of the preceding claims, **characterised in that** prior to introduction of the polymer melt into the treatment chamber (13) deactivators, additives, stabilisers or mixtures and combinations thereof are charged into the polymer melt, preferably by way of a mixing device preceding the thin-film treatment apparatus (1), which device is in particular a static mixer.

16. A method according to one of the preceding claims, **characterised in that** an inert gas is charged into the atmosphere in the interior of the thin-film treatment apparatus (1), preferably nitrogen, dried air and/or argon.

17. A method according to one of the preceding claims, **characterised in that** it is conducted such that
the content of the compounds in the polymer melt after passing through the thin-film treatment apparatus (1) is at most 0.2 times, preferably at most 0.1 times, the content of the compounds prior to passing through the thin-film treatment apparatus (1),
in particular the residual lactide content in the polymer melt after passing through the thin-film treatment apparatus (1) is less than 0.5%,
the yellowing of the polymer melt, measured as b* value, during the performance of the method is increased by no more than 4 scale values, the yellow colouration being determined by means of the method given in the description,
the yellow colouration of the polymer melt, measured as b* value, after passing through the thin-film evaporator is less than 15,
during the method at most 50 black specks per kilogramme discharged polymer melt are produced, and/or
the weight-average molecular weight of the polymer melt after performance of the method after demonomerisation is at most 20% less than the weight-average molecular weight of the polymer melt charged into the thin-film treatment apparatus (1), the weight-average molecular weight being determined by means of the method given in the description.

**Revendications**

1. Procédé de séparation de composés dans un état physique gazeux à partir d'un polymère fondu, contenant ces composés dans un état physique liquide ou solide, qui comprend du polylactide et/ou un poly(co)lactide, avec un dispositif de traitement à couche mince (1), comprenant

- un boîtier avec une enveloppe de boîtier apte à être chauffée et/ou refroidie, laquelle englobe une chambre de traitement (13) à symétrie de révolution qui s'étend dans la direction axiale,
- au moins une tubulure d'entrée (2), disposée dans une zone d'entrée du boîtier, pour l'introduction du matériau à traiter dans la chambre de traitement (13),
- au moins une tubulure de sortie, disposée dans une zone de sortie du boîtier, pour l'extraction du matériau à partir de la chambre de traitement (13), et
- un arbre de rotor entraînable, disposé dans la chambre de traitement (13) et s'étendant de façon coaxiale, pour la production d'un film de matériau sur la surface intérieure de l'enveloppe de boîtier, et pour le transport du matériau dans la direction qui va de la zone d'entrée vers la zone de sortie, l'arbre de rotor comprenant un corps d'arbre de rotor (6) central et des pales de rotor (3), disposées sur sa périphérie, dont l'extrémité la plus extérieure radialement est distante de la surface intérieure de l'enveloppe de boîtier (10), ainsi que
- au moins un capteur de température (11) disposé dans la chambre de traitement (13) et destiné à la mesure de la température du film de matériau,
dans lequel le polymère fondu dans l'état physique visqueux est introduit dans la chambre de traitement (13) par le biais de la tubulure d'entrée (2) au moins au nombre de un,
un film du polymère fondu est produit sur la surface intérieure de l'enveloppe de boîtier (10),
au moins une partie des composés contenus dans le polymère fondu dans l'état physique liquide ou solide est transférée dans l'état physique gazeux et est extraite du dispositif de traitement à couche mince (1) dans l'état physique gazeux,
de même que
le polymère fondu traité est extrait du dispositif de traitement à couche mince (1) par le biais de la tubulure de sortie au moins au nombre de un,
**caractérisé en ce que**,
au moyen du capteur de température (11) au moins au nombre de un, une détermination permanente ou temporaire d'une valeur de température locale du film du produit est effectuée à au moins un emplacement.

2. Procédé selon la revendication 1, la valeur de température déterminée étant comparée à une valeur de consigne, et au moins un paramètre de procédé étant régulé en fonction de l'écart à la valeur de consigne.

3. Procédé selon la revendication précédente, **caractérisé en ce que**, en fonction de l'écart à la valeur de consigne, la quantité de chaleur à introduire dans le polymère fondu ou respectivement à évacuer à l'emplacement correspondant est régulée.

4. Procédé selon l'une des deux revendications précédentes, **caractérisé en ce que** la quantité de chaleur à introduire dans le polymère fondu ou respectivement à évacuer est régulée au moins partiellement par le biais de la quantité de chaleur à introduire dans l'enveloppe de boîtier ou respectivement à évacuer et/ou par le biais de la vitesse de rotation de l'arbre de rotor.

5. Procédé selon l'une des revendications précédentes, **caractérisé en ce que** les composés à séparer sont sélectionnés dans le groupe composé de lactide, d'acide lactique, de dimères de l'acide lactique et, dans les conditions de procédé données, d'oligomères de l'acide lactique présents sous forme gazeuse, d'eau et d'additifs de la synthèse de polymère, comme par exemple des catalyseurs, des initiateurs ou des stabilisateurs ainsi que des combinaisons de ceux-ci.

6. Procédé selon l'une des revendications précédentes, **caractérisé en ce que** le dispositif de traitement à couche mince (1) est constitué sous la forme d'un évaporateur à couche mince, d'un sécheur à couche mince ou d'un réacteur à couche mince.

7. Procédé selon l'une des revendications précédentes, **caractérisé en ce qu'**une conduite de signalisation est affectée au capteur de température (11) au moins au nombre de un, au moyen de laquelle le signal obtenu avec le capteur de température (11) au moins au nombre de un est conduit à un dispositif de traitement de signal externe.

8. Procédé selon l'une des revendications précédentes, plusieurs capteurs de température (11) étant disposés de façon répartie sur la longueur de la chambre de traitement (13).

9. Procédé selon l'une des revendications précédentes, **caractérisé en ce que**

les pales de rotor (3) fonctionnent à une vitesse de rotation de 0,1 à 10 m/s, de préférence de 0,5 à 3 m/s, de façon particulièrement préférée de 0,5 à 2 m/s, et/ou,

une vitesse de cisaillement maximale de 1000 1/s, de préférence de 100 à 500 1/s, de façon particulièrement préférée de 200 à 300 1/s, est réglée au moyen des pales de rotor (3), la vitesse de cisaillement étant le quotient de la vitesse de rotation et de la distance des pales de rotor (3) par rapport à la paroi intérieure de la chambre de traitement (13).

10. Procédé selon l'une des revendications précédentes, **caractérisé en ce que**, dans l'intérieur de l'enveloppe de boîtier, il est constitué une cavité d'enveloppe de boîtier qui est parcourue par un fluide caloporteur à des fins de chauffage et/ou de refroidissement.

11. Dispositif de traitement à couche mince selon l'une des revendications précédentes, **caractérisé en ce que** l'enveloppe de boîtier comprend au moins deux segments d'enveloppe de boîtier (10a, 10b) qui sont chauffés et/ou refroidis indépendamment l'un de l'autre.

12. Procédé selon la revendication précédente, **caractérisé en ce que** les segments d'enveloppe de boîtier (10a, 10b) englobent respectivement une zone de chambre de traitement correspondante, et les capteurs de température (11) sont répartis sur différentes zones de chambre de traitement.

13. Procédé selon l'une des revendications précédentes, **caractérisé en ce que** la valeur de température obtenue du polymère fondu est utilisée pour le réglage à une valeur de consigne prédéfinie de la température de l'enveloppe de boîtier apte à être chauffée et/ou refroidie, en particulier l'enveloppe de boîtier au moins deux segments d'enveloppe de boîtier (10a, 10b) qui disposent respectivement d'au moins un capteur de température (11), et un réglage séparé de la température est effectué dans chaque segment d'enveloppe de boîtier (10a, 10b) au moyen d'une valeur de mesure respective de la température du film du polymère fondu dans le segment d'enveloppe de boîtier (10a, 10b) respectif.

14. Procédé selon l'une des revendications précédentes, **caractérisé en ce que** la viscosité du polymère fondu introduit est d'au moins 300 Pa.s, de préférence d'au moins 500 Pa.s, de façon particulièrement préférée de 1 000 à 6 000 Pa.s, la viscosité étant déterminée au moyen du procédé indiqué dans la description,

dans la chambre de traitement (13), en particulier par le biais d'une tubulure des buées (7), une pression réduite par rapport à des conditions normales est réglée, de préférence une pression inférieure à 100 mbars, plus préférablement inférieure à 10 mbars, de façon particulièrement préférée inférieure à 1 mbar, et de ce fait des composés dans l'état physique gazeux sont extraits par le biais de la tubulure des buées au moins au nombre de un, et les composés extraits sont de préférence récupérés par condensation et/ou désublimation dans un dispositif installé en aval destiné à la récupération de composés gazeux en particulier à partir de l'état physique gazeux,

le temps de séjour du polymère fondu dans le dispositif de traitement à couche mince (1) est de 2 à 4 min, de préférence de 5 à 10 min, et/ou

la température de l'enveloppe de boîtier apte à être chauffée, en particulier dans chacun des segments d'enveloppe de boîtier (10a, 10b), est réglée à une température inférieure à la température du polymère fondu chargé dans la chambre de traitement (13), en particulier est tempérée à une température de 130 à 250° C, de préférence de 160 à 240° C, en particulier de 180 à 220° C.

15. Procédé selon l'une des revendications précédentes, **caractérisé en ce que**, avant l'introduction du polymère fondu dans la chambre de traitement (13), des désactivateurs, des additifs, des stabilisateurs ou des mélanges et des combinaisons de ceux-ci sont chargés dans le polymère fondu, de préférence par le biais d'un dispositif mélangeur installé en amont du dispositif de traitement à couche mince (1), qui est en particulier un mélangeur statique.

16. Procédé selon l'une des revendications précédentes, **caractérisé en ce qu'**un gaz inerte, de préférence de l'azote, de l'air séché et/ou de l'argon, est chargé dans l'atmosphère dans l'espace intérieur du dispositif de traitement à couche mince (1).

17. Procédé selon l'une des revendications précédentes, **caractérisé en ce qu'**il est conduit de telle sorte que la teneur des composés dans le polymère fondu après la traversée du dispositif de traitement à couche mince (1) est égale au maximum à 0,2 fois, de préférence au maximum à 0,1 fois la teneur des composants avant la traversée du dispositif de traitement à couche mince (1), en particulier la teneur résiduelle en lactide dans le polymère fondu après la traversée du dispositif de traitement à couche mince (1) est inférieure à 0,5 %, la coloration en jaune du polymère fondu, mesurée en tant que valeur b*, pendant la réalisation du procédé, n'augmente pas de plus de 4 valeurs d'échelle, la coloration en jaune étant déterminée au moyen du procédé indiqué dans la description,

la coloration en jaune du polymère fondu, mesurée en tant que valeur b*, après la traversée de l'évaporateur à couche mince, est inférieure à 15,

pendant le procédé au maximum 50 blacks specks par kilogramme de polymère fondu extrait sont créés, et/ou

après la réalisation du procédé, le poids moléculaire du polymère fondu en moyenne pondérale est, après la démonomérisation, inférieur au maximum de 20% au poids moléculaire en moyenne pondérale du polymère fondu chargé dans le dispositif de traitement à couche mince (1), le poids moléculaire en moyenne pondérale étant déterminé au moyen du procédé indiqué dans la description.

Fig. 1

Fig. 2

Fig. 3

EP 3 318 590 B1

**IN DER BESCHREIBUNG AUFGEFÜHRTE DOKUMENTE**

**In der Beschreibung aufgeführte Patentdokumente**

- CH 523087
- EP 0499747 A2
- WO 9836012 A
- EP 1070097 A
- EP 2698392 A
- US 5844066 A
- WO 2014115486 A1
- EP 2698394 A
- EP 2188047 A

**In der Beschreibung aufgeführte Nicht-Patentliteratur**

- **J. DORGAN et al.** *J. Polym. Sci.: Part B: Polym. Physics,* 2005, vol. 43, 3100-3111